# EUROPEAN PATENT APPLICATION

(11) **EP 4 772 421 A1**
(43) Date of publication of application: **08.07.2026**
(21) Application number: 24878982.8
(22) Date of filing: 15.10.2024
(51) Int. Cl.: B62D 23/00, B62D 21/15

(54) **VEHICLE BODY AND VEHICLE**

(30) Priority: 16.10.2023 CN 202311337445
(71) Applicant: Great Wall Motor Company Limited, Baoding, Hebei 071000 (CN)
(72) Inventor: GAO, Peng, Baoding, Hebei 071000 (CN); HE, Zhijie, Baoding, Hebei 071000 (CN)
(74) Representative: Michalski Hüttermann & Partner mbB
(86) International application number: PCT/CN2024/124866
(87) International publication number: WO 2025/082339

(57) **Abstract**

A vehicle body and a vehicle. The vehicle body is provided with an auxiliary frame (1) and a battery pack (2) therein, wherein an energy absorbing structure (3) is provided on the side of the auxiliary frame (1) close to the battery pack (2); the energy absorbing structure (3) extends toward the battery pack (2); and the end of the energy absorbing structure (3) close to the battery pack (2) at least partly overlaps with the projection of the battery pack (2) in a front-back direction of the whole vehicle. In the vehicle body, the energy absorbing structure (3) is arranged on the auxiliary frame (1), and the end of the energy absorbing structure (3) close to the battery pack (2) at least partly overlaps with the projection of the battery pack (2) in the front-back direction of the whole vehicle, thereby facilitating the transmission of force between the auxiliary frame (1) and the battery pack (2) during vehicle collision, being beneficial for improving an energy absorbing effect during collision, and being capable of inhibiting the pulling of the auxiliary frame (1) on a rear section of a longitudinal beam and on a footwell area, thus reducing the amount of intrusion on a footwell.

## Description

The present application claims priority to Chinese Patent Application No. 2023113374454, titled "VEHICLE BODY AND VEHICLE", filed on October 16, 2023 with the China National Intellectual Property Administration, which is incorporated herein by reference in its entirety.

### FIELD

The present application relates to the technical field of vehicle components, and in particular to a vehicle body. Furthermore, the present application also relates to a vehicle including the vehicle body.

### BACKGROUND

Currently, as automotive design advances towards premiumization, an increasing number of vehicle models are placing greater emphasis on the collision safety performance of the entire vehicle. However, due to the pursuit of high efficiency and high integration in the structural design of pure electric vehicles, longitudinal beams of their front cabin are typically short cantilevers, which fail to fully absorb energy during collision scenarios. Consequently, when longitudinally crushed, the longitudinal beams are prone to upward warping and inward bending deformation. In addition, constrained by the existing vehicle body structure, the force transmission and energy absorption effects between the sub-frame and the vehicle body are often poor. This is particularly evident during frontal collisions, where inefficient force transmission between the sub-frame and the vehicle body adversely affects the overall collision safety performance of the vehicle.

### SUMMARY

In view of this, a vehicle body to enhance the force transmission and energy absorption effects of the vehicle body during a collision.

In order to achieve the above object, technical solutions of the present application are implemented as follows.

A vehicle body is provided, which is provided with a sub-frame and a battery pack.

An energy absorbing structure is provided on a side of the sub-frame close to the battery pack and extends towards the battery pack. An end of the energy absorbing structure close to the battery pack is arranged to at least partially overlap with a projection of the battery pack in a front-rear direction of a vehicle.

Furthermore, the energy absorbing structure is located in a middle portion of the sub-frame in a left-right direction of the vehicle; and/or, the energy absorbing structure is located at a central line of the vehicle body in the left-right direction.

Furthermore, a gap is formed between the battery pack and the end of the energy absorbing structure close to the battery pack.

Furthermore, a connecting bracket is provided at an end of the battery pack close to the sub-frame. The end of the energy absorbing structure close to the battery pack is arranged to align with the connecting bracket in the front-rear direction of the vehicle.

Additionally/alternatively, an internal longitudinal beam extending in the front-rear direction of the vehicle is provided inside the battery pack, and the internal longitudinal beam is arranged to align with the energy absorbing structure in the front-rear direction of the vehicle.

Furthermore, the energy absorbing structure includes an energy absorbing box, which is provided with a collapsing rib.

Furthermore, when viewed from an up-down direction of the vehicle, the energy absorbing box has a trapezoidal shape with a cross-section gradually decreasing from front to rear, and a cavity is formed inside the energy absorbing box.

Furthermore, a groove is formed at an end of the energy absorbing box close to the sub-frame, and the sub-frame is partially embedded in the groove to seal one end of the cavity.

A sealing plate is arranged at an end of the energy absorbing box close to the battery pack to seal the other end of the cavity.

Furthermore, a mounting crossbeam is provided at a rear portion of the sub-frame and is connected to a sill beam on each of left and right sides of the vehicle body, and the energy absorbing structure is arranged on the mounting crossbeam.

A connecting beam is inclinedly arranged between the mounting crossbeam and the sill beams, and in the front-rear direction of the vehicle, the connecting beams on both sides are arranged with a distance therebetween gradually increasing away from the sub-frame.

Furthermore, the mounting beam includes a crossbeam body and an extension beam arranged on each side of the crossbeam body.

The energy absorbing structure is arranged on the crossbeam body, and on each of the left and right sides, the extension beam is connected to the corresponding sill beam, the connecting beam is arranged between the extension beam and the sill beam, and the extension beam, the sill beam and the connecting beam are connected to form a triangular structure.

Furthermore, a sub-frame anti-collision beam is provided at an end of the sub-frame away from the battery pack, and is connected to the sub-frame via a sub-frame energy absorbing box arranged on each of the left and right sides.

The vehicle body has a vehicle body longitudinal beam arranged on each of the left and right sides. On each of the left and right sides, an end of the vehicle body longitudinal beam is connected to a main energy absorbing box that is arranged to vertically align with the sub-frame energy absorbing box.

Furthermore, viewed from the up-down direction of the vehicle, the sub-frame energy absorbing box has a width greater than or equal to 110mm in the left-right direction of the vehicle.

Additionally/alternatively, the main energy absorbing box is connected at its end to a main anti-collision beam. When viewed from the up-down direction of the vehicle, the main anti-collision beam is arranged further outward relative to the sub-frame anti-collision beam.

Furthermore, the sub-frame includes a sub-frame longitudinal beam arranged on each of the left and right sides, and a connecting arm is arranged at a middle portion of the sub-frame longitudinal beam.

A mounting hole is formed at a top portion of the connecting arm, and on each of the left and right sides, the connecting arm is connected to the vehicle body longitudinal beam via a bolt threaded through the mounting hole. Furthermore, an escape hole is further formed at the top portion of the connecting arm and extends from an edge of the connecting arm to the mounting hole, and the bolt in the mounting hole can escape through the escape hole.

Furthermore, the escape hole has a width gradually decreasing towards gradually decreasing towards the mounting hole.

Additionally/alternatively, when viewed from the up-down direction of the vehicle, the escape hole is inclined with its opening oriented obliquely outward.

Furthermore, the connecting arm includes a first connecting plate and a second connecting plate that are snap-fitted together. A top portion of the first connecting plate is arranged to extend outward relative to a top portion of the second connecting plate, and both the mounting hole and the escape hole are formed at the top portion of the first connecting plate.

Compared with the conventional technology, the present application has the following advantages.

According to the vehicle body in the present application, the energy absorbing structure is arranged on the sub-frame and extends towards the battery pack, and the end of the energy absorbing structure close to the battery pack is arranged to at least partially overlap with the projection of the battery pack in the front-rear direction of the vehicle. This design not only facilitates force transmission between the sub-frame and the battery pack during a vehicle collision, thereby improving the energy absorption effect during the collision, but also suppresses the pulling exerted by the sub-frame on a rear section of the longitudinal beam and on a footwell area, thereby reducing intrusion into the footwell.

In addition, the energy absorbing structure may be arranged in the middle portion of the sub-frame in the left-right direction of the vehicle, facilitating the arrangement of the energy absorbing structure and the force transmission between the sub-frame and the battery pack. Furthermore, a gap is formed between the energy absorbing structure and the battery pack, such that in the event of a significant impact force, the energy absorbing structure comes into contact with the battery pack and is crumpled to absorb energy, which prevents direct contact and damage to mounting point for the battery pack upon a collision, thereby providing better protection for the battery pack.

In addition, by providing the connecting bracket on the battery pack and aligning it with the energy absorbing structure in the front-rear direction, the collision force may be transmitted from the energy absorbing structure to the battery pack via the connecting bracket, thereby further enhancing the protection for the battery pack. In addition, by providing the internal longitudinal beam inside the battery pack and aligning it with the energy absorbing structure, the force transmitted to the battery pack from the energy absorbing structure is then transmitted rearward via the internal longitudinal beam, thereby enhancing the force transmission effect.

Secondly, the structural strength and energy absorption effect of the energy absorbing box can be improved by providing the collapsing rib on the energy absorbing box. In addition, the energy absorbing box has a trapezoidal shape with a cross-section gradually decreasing from front to rear, and the cavity is formed inside the energy absorbing box, which facilitates enhancing the structural strength and the energy absorption effect of the energy absorbing box. Moreover, by forming the groove at the end of the energy absorbing box close to the sub-frame, the connection area between the energy absorbing structure and the sub-frame may be increased, thereby ensuring the connection strength between them. Additionally, the provision of the sealing plate can not only improve the structural strength of the energy absorbing box, but also prevent foreign matter from entering the energy absorbing box and thereby affecting the collapse and energy absorption effects of the energy absorbing box.

Furthermore, the mounting crossbeam is arranged at the rear portion of the sub-frame, the energy absorbing structure is arranged on the mounting crossbeam, and the connecting beam is inclinedly arranged between the mounting crossbeam and the sill beam, the sub-frame can transmit force to the battery pack and the sill beam respectively via the energy absorbing structure and the connecting beam, thereby facilitating multi-path force transmission and improving the force transmission effect. In addition, the extension beam, the sill beam and the connecting beam on each side are connected to form a triangular structure, which exhibits excellent inherent stability, enhancing the structural strength and collision safety of the vehicle body, and thereby reducing damage to the battery pack and improving the overall safety.

In addition, by providing the sub-frame energy absorbing box and the main energy absorbing box, a two-layer energy absorbing structure is formed in the up-down direction, thereby improving the energy absorption effect. The width of the sub-frame energy absorbing box in the left-right direction of the vehicle is not less than 110mm, such that the sub-frame energy absorbing box has a large energy absorption area, thereby achieving better energy absorption effect. When viewed from the up-down direction of the vehicle, the main anti-collision beam is arranged further outward relative to the sub-frame anti-collision beam, so that the main anti-collision beam may be struck first during a collision. In the event of a significant collision force, the sub-frame anti-collision beam is subsequently struck. This design not only achieves a two-stage anti-collision and energy absorption effect but also ensures that, in the event of a small collision force, only the main anti-collision beam is struck, thereby protecting the sub-frame anti-collision beam and thereby reducing the repair and replacement costs.

Secondly, the connecting arm is connected to the corresponding vehicle body longitudinal beam via the bolt, simplifying the structure and facilitating the design and implementation. Additionally, the formation of the escape hole in the connecting arm facilitates the disengagement of the bolt from the mounting hole during a vehicle collision, thereby enabling the detachment of a middle mounting point of the sub-frame during a vehicle collision. This design not only facilitates the downward displacement of the sub-frame during a collision to reduce the intrusion of other components into the cockpit, but also facilitates the bending of the sub-frame during the collision to enhance the energy absorption effect of the sub-frame and reduce the intrusion into a front footwell area, thereby improving the collision safety of the vehicle.

In addition, by gradually decreasing the width of the escape hole towards the mounting hole, the mounting reliability of the bolt can be ensured while facilitating the disengagement of the bolt. The escape hole is inclined with its opening oriented obliquely outward, facilitating the disengagement of the bolt through the escape hole during a vehicle collision. The connecting arm includes the first connecting plate and the second connecting plate that are snap-fitted together, thereby simplifying the structure and facilitating the design and implementation. By forming the mounting hole and the escape hole in the first connecting plate that extends outward relative to the second connecting plate, the single-plate structure of the first connecting plate may be utilized to facilitate the formation of the escape hole and the disengagement of the bolt from the mounting hole.

Another object of the present application is to provide a vehicle having the vehicle body as described above.

The vehicle in the present application, by having the vehicle body as described above, facilitates the enhancement of the collision safety of the vehicle.

### BRIEF DESCRIPTION OF THE DRAWINGS

The accompanying drawings, which constitute a part of the present application, are intended to provide a further understanding of the present application. The exemplary embodiments of the present application and descriptions thereof are intended to explain the present application and do not constitute an improper limitation on the present application. In the accompanying drawings:
FIG. 1 is a structural schematic view of a vehicle body according to an embodiment of the present application;
FIG. 2 is an enlarged view of part A in FIG. 1;
FIG. 3 is another structural schematic view of the vehicle body according to the embodiment of the present application;
FIG. 4 is an enlarged view of part B in FIG. 3;
FIG. 5 is an enlarged view of part C in FIG. 3;
FIG. 6 is a partial structural schematic view of the vehicle body according to the embodiment of the present application;
FIG. 7 is a structural schematic view of a connecting arm according to an embodiment of the present application;
FIG. 8 is a structural schematic view of a first connecting plate according to an embodiment of the present application;
FIGS. 9 and 10 are other structural schematic views of the structure shown in FIG. 8; and
FIG. 11 is a structural schematic view of a second connecting plate according to an embodiment of the present application.

Numeral references are listed as follows:
1. sub-frame; 2. battery pack; 3. energy absorbing structure; 4. groove; 5. gap; 6. internal longitudinal beam; 7. mounting crossbeam; 701. crossbeam body; 702. extension beam; 8. collapsing rib; 9. connecting bracket; 10. connecting beam; 11. sub-frame anti-collision beam; 12. sub-frame energy absorbing box; 13. vehicle body longitudinal beam; 14. main energy absorbing box; 15. main anti-collision beam; 16. mounting bracket;
21. connecting arm; 211. first connecting plate; 2111. mounting hole; 2112. escape hole; 212. second connecting plate.

### DETAILED DESCRIPTION OF THE EMBODIMENTS

It should be noted that, in the absence of conflict, the embodiments and features in the embodiments of the present application may be combined with each other.

In the description of the present application, it should be noted that directional terms such as "upper", "lower", "left", "right", "front", and "rear" used in the embodiment are defined based on an up-down direction, a left-right direction, and a front-rear direction of the vehicle. Specifically, the up-down direction of the vehicle also refers to a height direction of the vehicle, the front-rear direction of the vehicle also refers to a length direction of the vehicle, and the left-right direction of the vehicle also refers to a width direction of the vehicle.

In addition, in the description of the present application, unless otherwise clearly defined, terms such as "mount", "couple", "connect", and "connecting member" should be understood in a broad sense. For example, the connection may be a fixed connection, a detachable connection, or an integral connection; it may be a mechanical connection or an electrical connection; it may be a direct connection, or it may be an indirect connection via an intermediate medium, or it may be an internal communication between two elements. For those ordinary skilled in the art, specific meanings of the above terms in the present application can be understood depending on specific circumstances.

The present application will be described in detail below with reference to the accompanying drawings and in conjunction with embodiments.

### First Embodiment

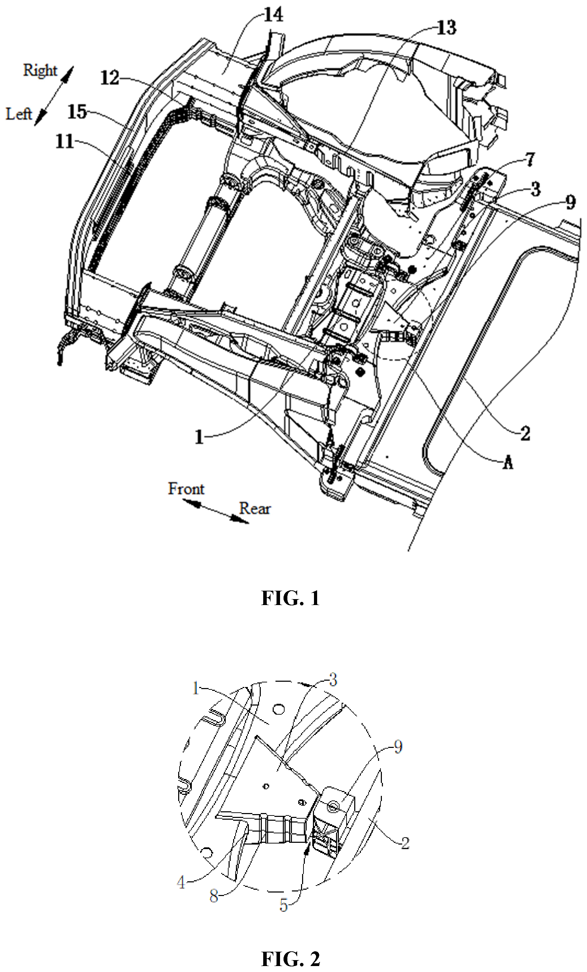

This embodiment relates to a vehicle body, the overall structure of which is shown in FIGS. 1 to 6. The vehicle body is provided with a sub-frame 1 and a battery pack 2. An energy absorbing structure 3 is arranged on a side of the sub-frame 1 close to the battery pack 2 and extends towards the battery pack 2. An end of the energy absorbing structure 3 close to the battery pack 2 is arranged to at least partially overlap with a projection of the battery pack 2 in the front-rear direction of the vehicle.

It should be noted that the sub-frame 1 in this embodiment is generally a front sub-frame. In a specific implementation, as shown in FIGS. 1 and 2, the end of the energy absorbing structure 3 close to the battery pack 2 is arranged to overlap with the projection of the battery pack 2 in the front-rear direction of the vehicle.

It can be understood that the energy absorbing structure 3 is arranged on the sub-frame 1 and extends towards the battery pack 2, and the end of the energy absorbing structure 3 close to the battery pack 2 is arranged to overlap with the projection of the battery pack 2 in the front-rear direction of the vehicle. This design not only facilitates force transmission between the sub-frame 1 and the battery pack 2 during a vehicle collision, thereby improving the energy absorption effect during the collision, but also suppresses the pulling exerted by the sub-frame 1 on a rear section of a longitudinal beam and on a footwell area, thereby reducing intrusion into the footwell.

Alternatively, the sub-frame 1 in this embodiment may be a rear sub-frame. In addition, it is also possible for the end of the energy absorbing structure 3 close to the battery pack 2 to only partially overlap with the projection of the battery pack 2 in the front-rear direction of the vehicle.

Based on the above overall introduction, in a preferred embodiment, the energy absorbing structure 3 is located in a middle portion of the sub-frame 1 in the left-right direction of the vehicle, as shown in FIGS. 1 and 2, and located at a central line of the vehicle body in the left-right direction. It can be expected that locating the energy absorbing structure 3 in the middle portion of the sub-frame 1 facilitates its arrangement and also promotes the transmission of the collision force from the sub-frame 1 to the battery pack 2, thereby enhancing the balance of the force applied to both left and right sides of the vehicle body.

It should be noted that, the middle portion of the sub-frame 1 generally coincides with the central line of the vehicle body. Of course, in a case that the middle portion of the sub-frame 1 does not coincide with the central line of the vehicle body, the energy absorbing structure 3 may be arranged in the middle portion of the sub-frame 1 or at the central line of the vehicle body depending on specific requirements.

In a preferred embodiment, a gap 5 is formed between the battery pack 2 and the end of the energy absorbing structure 3 close to the battery pack 2, as shown in FIG. 2. In this way, when there is a significant collision force, it may be transmitted to the battery pack 2 via the sub-frame 1, thereby avoiding direct damage to a mounting point for the battery pack 2 during a collision and providing effective protection for the battery pack 2. In addition, the gap 5 in this embodiment may have a dimension of 20mm.

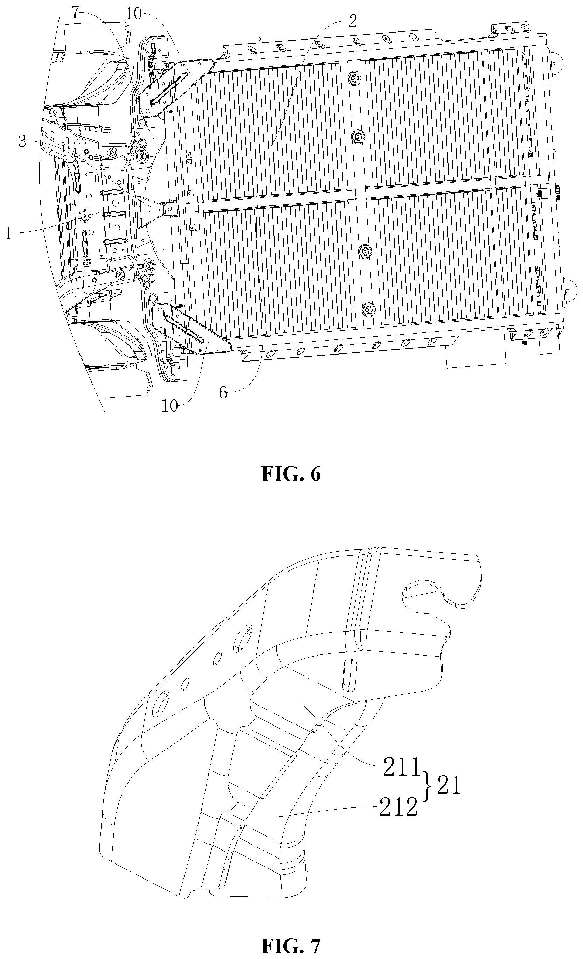

In a preferred embodiment, a connecting bracket 9 is provided at an end of the battery pack 2 close to the sub-frame 1, as shown in FIGS. 2 and 6. The end of the energy absorbing structure 3 close to the battery pack 2 is arranged to align with the connecting bracket 9 in the front-rear direction of the vehicle. An internal longitudinal beam 6 extending in the front-rear direction of the vehicle is provided inside the battery pack 2, and the internal longitudinal beam 6 is arranged to align with the energy absorbing structure 3 in the front-rear direction of the vehicle. The connecting bracket 9 typically serves as the mounting point for the battery pack 2, and is generally connected to a front crossbeam of a front floor. The internal longitudinal beam 6 usually runs through the battery pack 2 in the front-rear direction. It can be expected that by providing the connecting bracket 9 on the battery pack 2 and aligning it with the energy absorbing structure 3 in the front-rear direction, the collision force may be transmitted from the energy absorbing structure 3 to the battery pack 2 via the connecting bracket 9, thereby further enhancing the protection for the battery pack 2.

In addition, by providing the internal longitudinal beam 6 inside the battery pack 2, the force transmitted to the battery pack 2 from the energy absorbing structure 3 is then transmitted rearward via the internal longitudinal beam 6, which enables the battery pack 2 to participate in the collision force transmission of the vehicle, thereby increasing the force transmission path and enhancing the force transmission effect. Furthermore, the connecting bracket 9 may be connected to the crossbeam of the vehicle body, allowing the collision force transmitted to the connecting bracket 9 to be further transmitted to the crossbeam of the vehicle body. That is, the connecting bracket 9 may typically be connected to the front crossbeam of the front floor and transmit force to it, thereby further improving the force transmission effect.

It is noteworthy that in this embodiment, the provision of both the connecting bracket 9 on the battery pack 2 and the internal longitudinal beam 6 inside the battery pack 2 represents a preferred implementation. Alternatively, it is possible to arrange only the connecting bracket 9 on the battery pack 2 or only the internal longitudinal beam 6 inside the battery pack 2.

To facilitate the connection between the energy absorbing structure 3 and the sub-frame 1, a groove 4 is formed in the energy absorbing structure 3, and the sub-frame 1 is partially embedded in the groove 4. When connecting the energy absorbing structure 3 to the sub-frame 1, the provision of the groove 4 can increase the connection area between the energy absorbing structure 3 and the sub-frame 1, thereby ensuring the connection strength between them. In addition, the energy absorbing structure 3 may be connected to the sub-frame 1 by welding or in other connection manners commonly employed in the conventional technology.

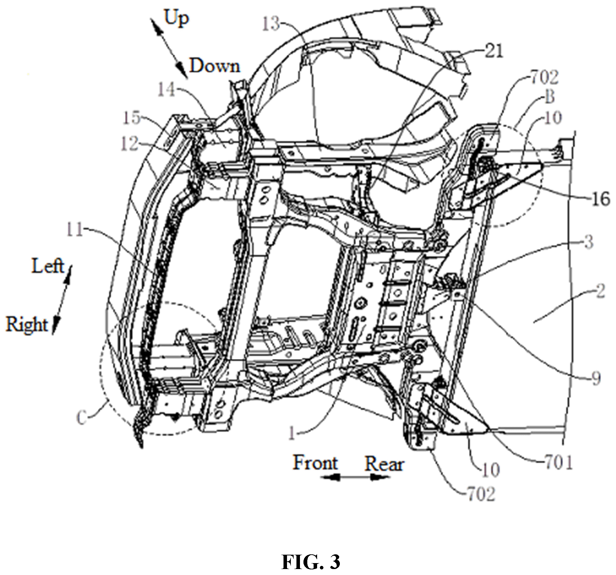

In a preferred embodiment, the energy absorbing structure 3 includes an energy absorbing box, and the groove 4 is located at an end of the energy absorbing box close to the sub-frame 1. In addition, the energy absorbing box is provided with a collapsing rib 8. Such a configuration not only simplifies the structure but also enhances the structural strength of the energy absorbing structure 3, achieving a better energy absorption effect. In a preferred embodiment, there are multiple collapsing ribs 8 arranged spaced apart from each other in the front-rear direction of the vehicle, and each collapsing rib 8 is arranged to extend through the energy absorbing box in the up-down direction. This configuration facilitates rapid collapse and energy absorption of the energy absorbing box. In a specific embodiment, there are two collapsing ribs 8 arranged spaced apart from each other in the front-rear direction, as shown in FIG. 3. Of course, the number of the collapsing ribs 8 may be adjusted accordingly depending on design requirements.

In addition, in a specific implementation, when viewed from the up-down direction of the vehicle, the energy absorbing box has a trapezoidal shape with a cross-section gradually decreasing from front to rear, as shown in FIG. 2, and a cavity is formed inside the energy absorbing box, facilitating further enhancing the structural strength and the energy absorption effect of the energy absorbing box. Moreover, as shown in FIG. 3, the sub-frame 1 is partially embedded in the groove 4 to seal one end of the cavity. Additionally, a sealing plate is arranged at the end of the energy absorbing box close to the battery pack 2 to seal the other end of the cavity. The provision of the sealing plate can not only improve the structural strength of the energy absorbing box, but also prevent foreign matter from entering the energy absorbing box and thereby affecting the collapse and energy absorption effects of the energy absorbing box.

In a preferred embodiment, a mounting crossbeam 7 is provided at a rear portion of the sub-frame 1 and is connected to a sill beam on each of the left and right sides of the vehicle body, as shown in FIGS. 2, 3 and 4. The energy absorbing structure 3 is arranged on the mounting crossbeam 7, and a connecting beam 10 is inclinedly arranged between the mounting crossbeam 7 and the sill beam (not shown in the figures) on each of the left and right sides. Moreover, in the front-rear direction of the vehicle, the connecting beams 10 on both sides are arranged with a distance therebetween gradually increasing along the sub-frame 1. This structure enables the connecting beams 10 on both sides to be arranged in a truncated "V" shape, improving the stability between the sub-frame 1 and the sill beams on both sides. It can be understood that by providing the mounting crossbeam 7 and arranging the connecting beam 10 between the mounting crossbeam 7 and the sill beam, the sub-frame 1 can transmit force to the battery pack 2 and the sill beam respectively via the energy absorbing structure 3 and the connecting beam 10, thereby facilitating multi-path force transmission and improving the force transmission effect.

In a specific implementation, as shown in FIGS. 3 and 6, the mounting crossbeam 7 includes a crossbeam body 701 and an extension beam 702 arranged on each side of the crossbeam body 701. The energy absorbing structure 3 is arranged on the crossbeam body 701, and the connecting beam 10 is arranged between the extension beam 702 and the sill beam. In this way, the collision force transmitted to the sub-frame 1 may be transmitted to the battery pack 2 via the crossbeam body 701 and the energy absorbing structure 3, and may also be transmitted to the sill beam via the crossbeam body 701, the extension beam 702 and the connecting beam 10 on each side. In addition, in this embodiment, the extension beam 702 on each side may be connected to the sill beam on its corresponding side, as shown in FIG. 3. The extension beam 702, the sill beam and the connecting beam 10 on each side are connected to form a triangular structure. This arrangement facilitates direct force transmission from the sub-frame 1 to the sill beam via the extension beam 702 on each side, further ensuring the force transmission effect.

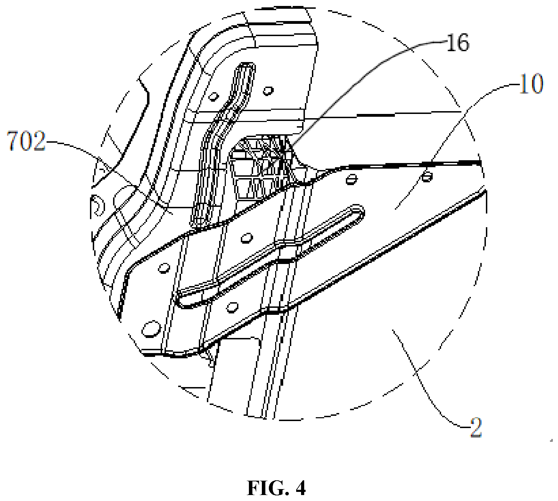

In addition, the extension beam 702, the sill beam and the connecting beam 10 on each side are connected to form a triangular structure, which exhibits excellent inherent stability, enhancing the structural strength and collision safety of the vehicle body and thereby reducing damage to the battery pack 2 and improving the overall safety. In a preferred embodiment, the extension beam 702 is formed with an avoidance groove that is open towards the battery pack 2, and a mounting bracket 16 is arranged at each of two ends of the battery pack 2, as shown in FIGS. 3 and 4.

Furthermore, the mounting bracket 16 may typically serve as a mounting point for the battery pack 2 and may be connected to the crossbeam of the front floor. The mounting bracket 16 at each end is inserted into the corresponding avoidance groove and connected to the corresponding connecting beam 10. This design not only enables the battery pack 2 to be connected to the sub-frame 1 via the connecting beams 10, enhancing the mounting firmness of the battery pack 2 on the vehicle body, but also allows the extension beam 702 to better protect the mounting bracket 16 during a side collision, thereby preventing the battery pack 2 from detaching from the vehicle body.

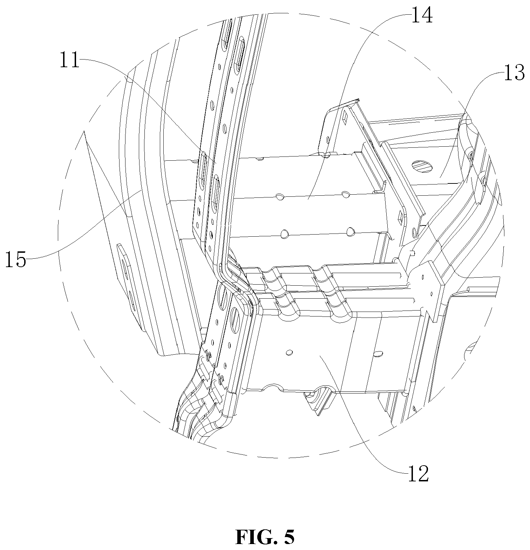

In a preferred embodiment, a sub-frame anti-collision beam 11 is provided at an end of the sub-frame 1 away from the battery pack 2, as shown in FIGS. 3 and 5. The sub-frame anti-collision beam 11 is connected to the sub-frame 1 via a sub-frame energy absorbing box 12 arranged on each of the left and right sides. Additionally, the vehicle body has a vehicle body longitudinal beam 13 arranged on each of the left and right sides. An end of the vehicle body longitudinal beam 13 is connected to a main energy absorbing box 14 that is arranged to vertically align with the sub-frame energy absorbing box 12 on the same side.

Furthermore, as a further implementation, when viewed from the up-down direction of the vehicle, the sub-frame energy absorbing box 12 has a width not less than 110mm in the left-right direction of the vehicle. As shown in FIG. 5, the sub-frame energy absorbing box 12 in this embodiment adopts a wide energy absorbing box structure, and its width in the Y-direction, that is, the width in the left-right direction of the vehicle is not less than 120mm. For example, it is set to 125mm, 130mm, 135mm or other values. This configuration can not only enhance the connection firmness between the sub-frame anti-collision beam 11 and the sub-frame 1, but also improve the energy absorption effect of the sub-frame energy absorbing box 12.

It can be understood that by providing the sub-frame energy absorbing box 12 and the main energy absorbing box 14 and arranging them vertically in alignment with each other, a two-layer energy absorbing structure 3 is formed in the up-down direction, thereby improving the energy absorption effect. In addition, as shown in FIG. 1, as a further implementation, the main energy absorbing box 14 is connected at its end to a main anti-collision beam 15. When viewed from the up-down direction of the vehicle, the main anti-collision beam 15 is arranged further outward relative to the sub-frame anti-collision beam 11. With such an arrangement, the main anti-collision beam 15 may be struck first during a collision. In the event of a significant collision force, the sub-frame anti-collision beam 11 is subsequently struck. This design not only achieves a two-stage anti-collision and energy absorption effect but also ensures that, in the event of a small collision force, only the main anti-collision beam 15 is struck, thereby protecting the sub-frame anti-collision beam 11 and thereby reducing repair and replacement costs.

In addition, in a preferred embodiment, the sub-frame 1 has a sub-frame longitudinal beam arranged on each of the left and right sides, as shown in FIGS. 1 and 7. A connecting arm 21 is arranged at a middle portion of the sub-frame longitudinal beam. Moreover, a mounting hole 2111 is formed at a top portion of the connecting arm 21, and the connecting arm 21 is connected to the vehicle body longitudinal beam 13 on the same side via a bolt threaded through the mounting hole 2111. Furthermore, an escape hole 2112 is further formed at the top portion of the connecting arm 21 and extends from an edge of the connecting arm 21 to the mounting hole 2111, and the bolt 32 in the mounting hole 2111 can escape through the escape hole 2112.

In this embodiment, the connecting arm 21 is connected to the corresponding vehicle body longitudinal beam 13 via the bolt, simplifying the structure and facilitating the design and implementation. The formation of the escape hole 2112 in the connecting arm 21 facilitates the disengagement of the bolt from the mounting hole 2111 during a vehicle collision, thereby enabling the detachment of a middle mounting point of the sub-frame during a vehicle collision. This design not only facilitates the downward displacement of the sub-frame 1 during a collision to reduce the intrusion of other components into the cockpit, but also facilitates the bending of the middle portion of the sub-frame 1 during the collision to enhance the energy absorption effect of the sub-frame 1 and reduce the intrusion into a front footwell area, thereby improving the collision safety of the vehicle.

Specifically, as shown in FIG. 3, a bottom portion of the connecting arm 21 is connected to the sub-frame longitudinal beam of the sub-frame 1. In addition, in a preferred embodiment, the connecting arm 21 includes a first connecting plate 211 and a second connecting plate 212 that are snap-fitted together, as shown in FIG. 7. Moreover, a top portion of the first connecting plate 211 is arranged to extend outward relative to a top portion of the second connecting plate 212, and both the mounting hole 2111 and the escape hole 2112 are formed in the top portion of the first connecting plate 211.

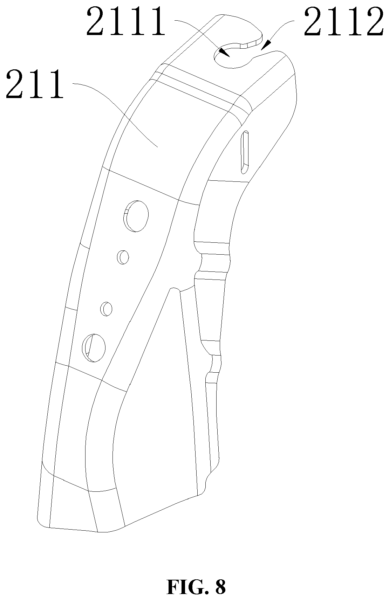

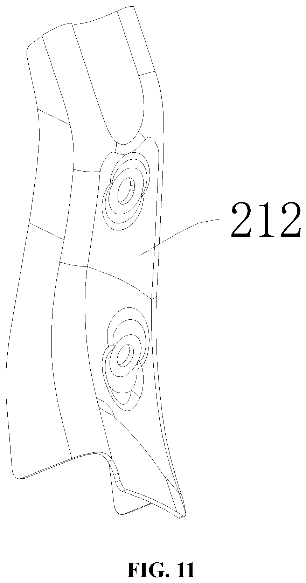

By forming the mounting hole 2111 and the escape hole 2112 in the first connecting plate 211, the single-plate structure of the first connecting plate 211 may be utilized to facilitate the formation of the escape hole 2112 and the disengagement of the bolt 32 from the mounting hole 2111. In this embodiment, as shown in FIGS. 8 to 11, both the first connecting plate 211 and the second connecting plate 212 are visually approximately U-shaped to provide good structural strength. Moreover, the two plates are snap-fitted together to form a cavity, and the structural strength of the connecting arm 21 may be further improved by utilizing the high structural strength characteristic of the cavity. Additionally, to facilitate the outward extension of the top portion of the first connecting plate 211 relative to the top portion of the second connecting plate 212, the second connecting plate 212 is snap-fitted into the first connecting plate 211.

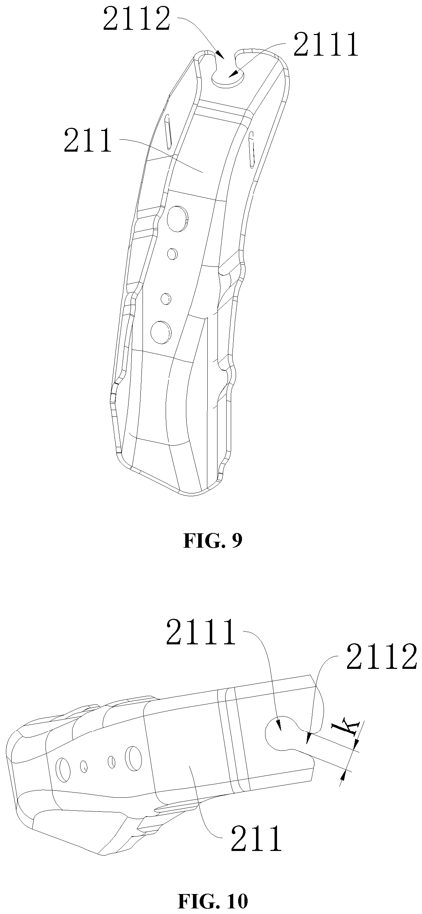

As a further implementation, as shown in FIG. 10, the escape hole 2112 in this embodiment has a width gradually decreasing towards the mounting hole 2111. This design offers the advantage of ensuring reliable mounting of the bolt while facilitating the disengagement of the bolt. In addition, in another preferred embodiment, when viewed from the up-down direction of the vehicle, the escape hole 2112 is inclined with its opening oriented obliquely outward. Moreover, in a case that the sub-frame 1 in this embodiment serves as a front sub-frame, the opening of the escape hole 2112 is oriented towards a side front direction of the vehicle, facilitating the disengagement of the bolt through the escape hole 2112 during a vehicle collision. The vehicle body in this embodiment is provided with the energy absorbing structure 3 on the sub-frame 1, which not only facilitates the force transmission between the sub-frame 1 and the battery pack 2 and enhances the energy absorption effect during the collision, but also suppresses the pulling exerted by the sub-frame 1 on the rear section of the longitudinal beam and the footwell area, thereby reducing the intrusion into the footwell. In addition, the provision of the internal longitudinal beam 6 and the connecting beam 10 facilitates multi-path force transmission, thereby improving the force transmission effect.

### Second Embodiment

This embodiment relates to a vehicle including the vehicle body according to the first embodiment.

The vehicle in this embodiment includes the vehicle body according to the first embodiment, facilitating the enhancement of the collision safety of the vehicle.

The above description shows merely preferred embodiments of the present application and is not intended to limit the present application. Any modifications, equivalent substitutions, improvements, etc. made within the spirit and principles of the present application should fall within the protection scope of the present application.

## Claims

1. A vehicle body, **characterized in that**:
the vehicle body is provided with a sub-frame (1) and a battery pack (2); and
an energy absorbing structure (3) is provided on a side of the sub-frame (1) close to the battery pack (2), wherein the energy absorbing structure (3) extends towards the battery pack (2), and an end of the energy absorbing structure (3) close to the battery pack (2) is arranged to at least partially overlap with a projection of the battery pack (2) in a front-rear direction of a vehicle.

2. The vehicle body according to claim 1, wherein
the energy absorbing structure (3) is located in a middle portion of the sub-frame (1) in a left-right direction of the vehicle; and/or
the energy absorbing structure (3) is located at a central line of the vehicle body in the left-right direction.

3. The vehicle body according to claim 1, wherein
a gap (5) is formed between the battery pack (2) and the end of the energy absorbing structure (3) close to the battery pack (2).

4. The vehicle body according to claim 1, wherein
a connecting bracket (9) is provided at an end of the battery pack (2) close to the sub-frame (1), and the end of the energy absorbing structure (3) close to the battery pack (2) is arranged to align with the connecting bracket (9) in the front-rear direction of the vehicle; and/or
an internal longitudinal beam (6) extending in the front-rear direction of the vehicle is provided inside the battery pack (2), wherein the internal longitudinal beam (6) is arranged to align with the energy absorbing structure (3) in the front-rear direction of the vehicle.

5. The vehicle body according to claim 1, wherein
the energy absorbing structure (3) comprises an energy absorbing box, which is provided with a collapsing rib (8).

6. The vehicle body according to claim 5, wherein
when viewed from an up-down direction of the vehicle, the energy absorbing box has a trapezoidal shape with a cross-section gradually decreasing from front to rear, and a cavity is formed inside the energy absorbing box.

7. The vehicle body according to claim 6, wherein
a groove (4) is formed at an end of the energy absorbing box close to the sub-frame (1), and the sub-frame (1) is partially embedded in the groove (4) to seal one end of the cavity; and
a sealing plate is arranged at an end of the energy absorbing box close to the battery pack (2) to seal the other end of the cavity.

8. The vehicle body according to claim 1, wherein
a mounting crossbeam (7) is provided at a rear portion of the sub-frame (1) and is connected to a sill beam on each of left and right sides of the vehicle body, and the energy absorbing structure (3) is arranged on the mounting crossbeam (7); and
a connecting beam (10) is inclinedly arranged between the mounting crossbeam (7) and the sill beam, and in the front-rear direction of the vehicle, the connecting beams (10) on both sides are arranged with a distance therebetween gradually increasing away from the sub-frame (1).

9. The vehicle body according to claim 8, wherein
the mounting crossbeam (7) comprises a crossbeam body (701) and an extension beam (702) arranged on each side of the crossbeam body (701); and
the energy absorbing structure (3) is arranged on the crossbeam body (701), and on each of the left and right sides, the extension beam (702) is connected to the sill beam, the connecting beam (10) is arranged between the extension beam (702) and the sill beam, and the extension beam (702), the sill beam and the connecting beam (10) are connected to form a triangular structure.

10. The vehicle body according to any one of claims 1 to 8, wherein
a sub-frame anti-collision beam (11) is provided at an end of the sub-frame (1) away from the battery pack (2), and is connected to the sub-frame (1) via a sub-frame energy absorbing box (12) arranged on each of the left and right sides; and
the vehicle body has a vehicle body longitudinal beam (13) arranged on each of the left and right sides, and on each of the left and right sides, an end of the vehicle body longitudinal beam (13) is connected to a main energy absorbing box (14) that is arranged to vertically align with the sub-frame energy absorbing box (12).

11. The vehicle body according to claim 10, wherein
when viewed from the up-down direction of the vehicle, the sub-frame energy absorbing box (12) has a width greater than or equal to 110mm in the left-right direction of the vehicle; and/or
the main energy absorbing box (14) is connected at its end to a main anti-collision beam (15), and when viewed from the up-down direction of the vehicle, the main anti-collision beam (15) is arranged further outward relative to the sub-frame anti-collision beam (11).

12. The vehicle body according to claim 10, wherein
the sub-frame (1) has a sub-frame longitudinal beam arranged on each of the left and right sides, and a connecting arm (21) is arranged at a middle portion of the sub-frame longitudinal beam;
a mounting hole (2111) is formed at a top portion of the connecting arm (21), and on each of the left and right sides, the connecting arm (21) is connected to the vehicle body longitudinal beam (13) via a bolt threaded through the mounting hole (2111); and
an escape hole (2112) is further formed at the top portion of the connecting arm (21), wherein the escape hole (2112) extends from an edge of the connecting arm (21) to the mounting hole (2111), and the bolt in the mounting hole (2111) can escape through the escape hole (2112).

13. The vehicle body according to claim 12, wherein
the escape hole (2112) has a width gradually decreasing towards the mounting hole (2111); and/or
when viewed from the up-down direction of the vehicle, the escape hole (2112) is inclined with its opening oriented obliquely outward.

14. The vehicle body according to claim 12, wherein
the connecting arm (21) comprises a first connecting plate (211) and a second connecting plate (212) that are snap-fitted together, a top portion of the first connecting plate (211) is arranged to extend outward relative to a top portion of the second connecting plate (212), and both the mounting hole (2111) and the escape hole (2112) are formed at the top portion of the first connecting plate (211).

15. A vehicle, **characterized in that**:
the vehicle comprises the vehicle body according to any one of claims 1 to 14.
